# FASCICULE DE BREVET EUROPEEN

(11) **EP 2 961 032 B1**
(45) Date de publication et mention de la délivrance du brevet: **15.11.2017**
(21) Numéro de dépôt: 15171319.5
(22) Date de dépôt: 10.06.2015
(51) Int. Cl.: H02J 13/00, H02J 3/00

(54) **PROCÉDÉ ET DISPOSITIF POUR GÉRER LE PARTAGE DE RESSOURCES ENTRE ÉQUIPEMENTS PRODUCTEUR ET/OU CONSOMMATEUR**
VERFAHREN UND VORRICHTUNG ZUR STEUERUNG DER RESSOURCEN-AUFTEILUNG AUF ERZEUGUNGS- UND/ODER VERBRAUCHSGERÄTE
METHOD AND DEVICE FOR MANAGING RESOURCE SHARING BETWEEN PRODUCER AND/OR CONSUMER DEVICES

(30) Priorité: 26.06.2014 FR 1455945
(43) Date de publication de la demande: 30.12.2015
(73) Titulaire: Smart Grid Energy, 40130 Capbreton (FR)
(72) Inventeur: BORDAS, Mathieu, 40130 CAPBRETON (FR)
(74) Mandataire: Lopez, Frédérique

(56) Documents cités:
- EP-A2- 2 429 053
- JP-A- 2003 111 311
- US-A1- 2005 207 081
- US-A1- 2009 216 387
- US-A1- 2010 106 332

## Description

### Domaine de l'invention

L'invention concerne le domaine de la gestion de ressources partagées, et en particulier présente un procédé et un dispositif pour fournir la capacité de modulation d'un équipement producteur et/ou consommateur d'une ressource partagée sur un réseau d'échange de ressource entre une multitude d'équipements.

### Etat de la Technique

Dans les réseaux d'équipements consommateurs et producteurs de ressources, une ressource est considérée comme partagée sur le réseau dès lors que sa production ou sa consommation ont un effet sur sa disponibilité. Chaque équipement d'un tel réseau consomme ou produit ladite ressource partagée pour répondre à ses besoins propres, sans regard sur l'équilibre global du réseau.

Or, en fonctionnant de façon autonome par un comportement isolé, les équipements producteurs et consommateurs provoquent régulièrement un déséquilibre de la ressource partagée, imposant des moyens d'équilibrage parfois importants.

Un exemple connu est celui de l'énergie électrique pour lequel un équipement ne peut consommer de l'électricité que si au même moment la quantité requise est produite pour lui. Ainsi, le réseau électrique doit présenter à chaque instant un équilibre entre la production et la consommation, et le bon fonctionnement des équipements dépend de cet équilibre.

Aussi, pour maintenir en permanence l'équilibre entre l'offre et la demande d'électricité, les opérateurs des réseaux de transport d'électricité font appel à des acteurs d'ajustement qui se chargent de moduler la consommation ou la production électrique pour maintenir l'équilibre du réseau.

Il existe des solutions qui permettent d'empêcher la consommation d'une ressource partagée par un ensemble d'équipements. Ainsi, la demande de brevet WO 2013/011221 A1 de Heintz et al. présente un système de mesure et de réduction en temps réel de la consommation électrique d'une pluralité d'appareils électriques. Le système permet d'adresser périodiquement des relevés de mesures à une plateforme externe et recevoir de la plateforme des ordres pour commander l'interruption pendant une durée prédéterminée de l'alimentation de tout ou partie des appareils électriques. Le document US 2009/216387 A1 divulgue un procédé similaire. Dans ces approches, l'interruption de la consommation électrique est réalisable à partir de boitiers de commandes qui peuvent être installés à différents niveaux de la chaîne d'alimentation électrique, le plus en aval se situant en général au niveau du tableau de distribution électrique du site consommateur. De tels boitiers, aptes à recevoir et à exécuter des ordres de délestage reçus d'un centre de décision disposant d'une vision en temps réel de la consommation sur le système électrique, coupent temporairement l'alimentation électrique de certains appareils ou groupes d'appareils consommateurs en les déconnectant du réseau d'alimentation, ce qui réduit instantanément la consommation pour une durée définie.

Cependant avec ces solutions, les interruptions peuvent provoquer des pertes d'usage non maîtrisables pour le consommateur qui subit le délestage et ne peut (ré)utiliser son équipement qu'après l'écoulement de la période de temps de coupure définie par le centre de décision.

Ainsi il n'existe pas dans l'art antérieur de solution pour la gestion du partage d'une ressource entre une pluralité d'équipements, qui ne présente aucun risque de pénaliser l'usager et qui permette que chaque équipement consommateur ou producteur d'une ressource participe à l'équilibrage de la ressource en fonction de sa capacité de moduler sa propre consommation ou production de la ressource.

La présente invention répond à ce besoin.

### Résumé de l'invention

Un objet de la présente invention est de proposer une solution permettant à chaque équipement partageant une ressource de participer à l'équilibrage entre la production et la consommation de la ressource, en informant un acteur d'équilibrage de sa capacité de moduler sa production ou sa consommation de la ressource.

Avantageusement, le dispositif de l'invention comprend un module, couplé à un équipement du réseau, qui permet de relever, analyser des données internes de l'équipement, calculer sa capacité intrinsèque et émettre une offre de modulation. Lorsque qu'une offre est validée et activée par un acteur d'équilibrage, le module reçoit un ordre d'activation, qu'il interprète pour piloter l'équipement hôte qui met en oeuvre l'offre de modulation.

Le dispositif de la présente invention permet d'optimiser la consommation ou la production d'une ressource en ajustant en temps réel la contribution de chaque équipement d'un réseau partageant une ressource.

Avantageusement, le dispositif de la présente invention permet de diminuer les pics de consommation, tout en respectant les besoins des utilisateurs.

Pour obtenir les résultats recherchés, un procédé, un dispositif et un produit programme d'ordinateur sont proposés.

En particulier, un procédé pour gérer le partage d'une ressource entre une pluralité d'équipements, le procédé comprend les étapes de :
- déterminer pour au moins un équipement, une valeur de capacité intrinsèque de modulation représentative de la capacité propre dudit au moins un équipement à modifier sa consommation ou sa production de la ressource partagée, ladite valeur étant calculée en fonction de données statiques, dynamiques et temps réel dudit au moins un équipement ; et
- émettre sur un réseau de communication partagé entre la pluralité d'équipements, un message indiquant une offre de modulation pour ledit au moins un équipement, l'offre de modulation étant en consommation ou en production de ladite ressource partagée selon la valeur de capacité intrinsèque de modulation calculée.

Dans un mode de réalisation, l'étape de détermination de la valeur de la capacité intrinsèque de modulation d'un équipement, comprend les étapes de récupérer les données statiques, dynamiques et temps réel dudit au moins un équipement ; et d'utiliser l'ensemble des données pour exécuter un algorithme de calcul générant une valeur représentative de la capacité intrinsèque de modulation dudit au moins un équipement.

Dans une variante, le procédé comprend une étape initiale de recevoir du réseau de communication un message de fournir pour au moins un équipement, une offre de modulation, en consommation ou en production, d'une ressource partagée par la pluralité d'équipements.

Si le message reçu en appel d'offre, contient des contraintes pour la modulation, l'étape de détermination de la valeur de la capacité intrinsèque de modulation d'un équipement est faite en fonction des données statiques, dynamiques et temps réel de l'équipement, et en fonction des contraintes de modulation contenues dans le message reçu.

Dans une variante, le message reçu selon un protocole de communication du réseau est interprété puis formaté pour exécution par l'algorithme de calcul.

Avantageusement, le message émis est formaté selon le protocole de communication du réseau.

Dans une variante, le message reçu provient d'un acteur d'équilibrage qui contrôle l'équilibre du partage de ressources entre une pluralité d'équipements du réseau et le message émis est envoyé vers cet acteur d'équilibrage.

Dans une implémentation, les paramètres statiques d'un équipement sont prédéfinis par le fabricant de l'équipement.

Dans un mode de réalisation, les données de fonctionnement en temps réel consistent en des valeurs relevées sur une pluralité de capteurs couplés à l'équipement.

Dans une implémentation, les contraintes contenues dans le message reçu sont relatives à des délais ou à des plages de temps.

Dans une variante, le message reçu contient aussi un ordre d'activation de l'offre de modulation et le procédé comprend de plus avant l'étape d'émission de la réponse, une étape d'activer la modulation pour l'équipement. Avantageusement, le message émis contient une confirmation de l'activation.

L'étape d'activation consiste à piloter des composants couplés à l'équipement pour augmenter ou baisser sa consommation ou sa production de la ressource partagée.

Avantageusement, la ressource partagée entre la pluralité d'équipements peut être par exemple une ressource électrique ou thermique.

L'invention couvre aussi un dispositif pour gérer le partage d'une ressource entre une pluralité d'équipements qui comprend des moyens pour mettre en oeuvre les étapes du procédé.

Dans un mode d'implémentation, le dispositif comprend un processeur et des moyens couplés au processeur pour mettre en oeuvre tout ou partie des étapes du procédé selon les différents modes d'implémentation.

L'invention peut opérer sous la forme d'un produit programme d'ordinateur qui comprend des instructions de code permettant d'effectuer tout ou partie des étapes du procédé revendiqué lorsque le programme est exécuté par un processeur.

### Description des figures

Différents aspects et avantages de l'invention vont apparaître en appui de la description d'un mode préféré d'implémentation de l'invention mais non limitatif, avec référence aux figures ci-dessous :
La figure 1 montre un environnement général dans lequel l'invention peut être implémentée;
La figure 2 montre schématiquement le dispositif de l'invention dans un mode de réalisation;
Les figures 3a et 3b illustrent un enchaînement des étapes du traitement d'un message par le dispositif de la figure 2;
La figure 4 illustre dans un mode de réalisation de l'invention, les échanges de message lors de l'évaluation de la capacité intrinsèque de modulation d'un équipement;
La figure 5 illustre dans un mode de réalisation de l'invention, les échanges de message lors de l'activation de la modulation d'une ressource;
La figure 6 illustre dans un mode de réalisation de l'invention, les échanges de message lors de l'acquisition de données d'un équipement.

### Description détaillée de l'invention

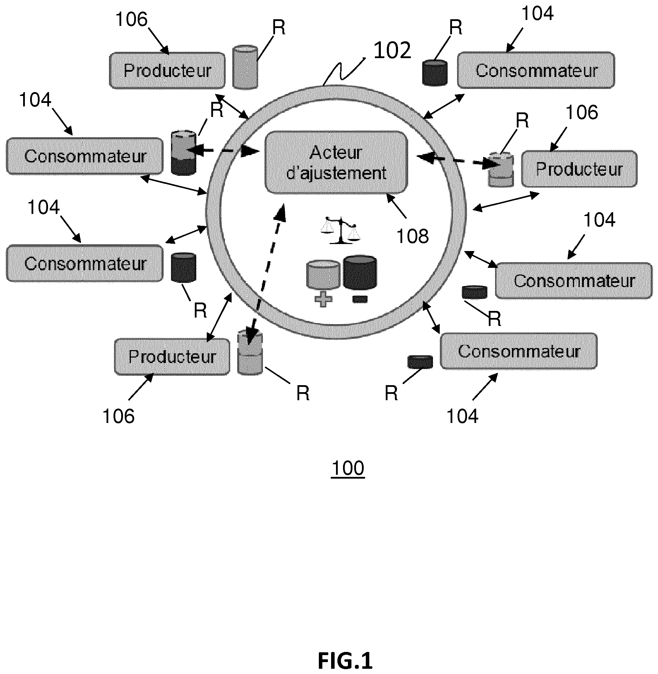

La figure 1 montre un environnement général 100 dans lequel opérer la présente invention de manière préférentielle. Un ensemble d'équipements autonomes (104, 106) de nature et fonction diverses sont consommateur 104 ou producteur 106 d'une même ressource 'R'. Les équipements peuvent être localisés de manière indifférenciée sur une géographie proche ou éloignée. De nouveaux équipements, consommateur ou producteur, peuvent être ajoutés ou d'autres existants retirés de manière régulière, formant ainsi un réseau évolutif d'équipements partageant une même ressource 'R'.

Bien que la figure 1 illustre l'exemple d'un seul réseau évolutif, l'homme de l'art comprend qu'un équipement producteur ou consommateur peut aussi appartenir à un deuxième réseau où d'autres équipements partagent une même ressource, les principes de l'invention n'étant pas limités à l'application sur un seul réseau.

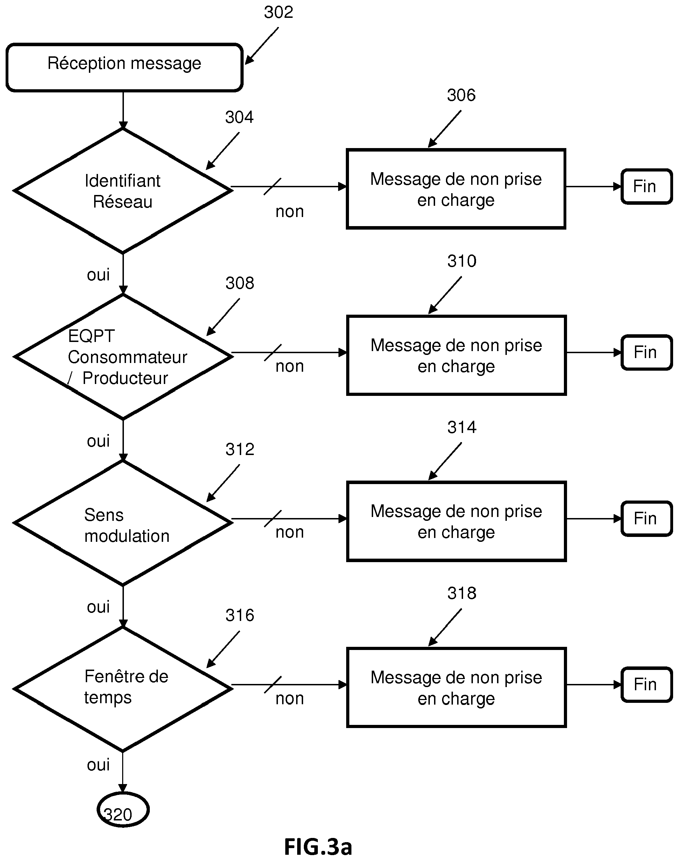

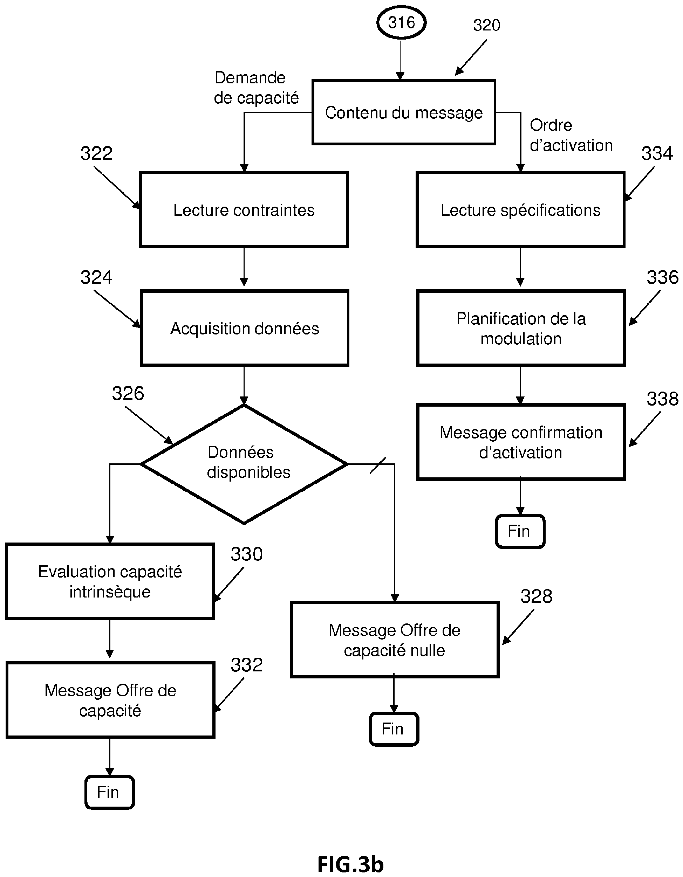

Un acteur d'ajustement du réseau 108 est chargé du maintien de l'équilibre entre la production et la consommation de la ressource partagée. Cependant, certains déséquilibres peuvent être acceptés dans un intervalle de tolérance. A chaque instant, la ressource présente un déséquilibre entre production et consommation, et l'acteur d'ajustement 108 connaît en permanence l'état d'équilibre de la ressource R sur le réseau. Lorsqu'un déséquilibre est trop important, il doit être minimisé sous peine de voir le réseau s'écrouler, et rendre les échanges impossibles. L'acteur d'ajustement 108 envoie des ordres, via un réseau de communication 102, à des équipements subordonnés, de moduler leur production ou leur consommation pour contrer un déséquilibre. Selon le principe de l'invention tel qu'il est décrit en référence aux figures 3a et 3b, l'acteur d'ajustement envoie des ordres d'activation après avoir reçu des équipements en réponse à un appel d'offre, leurs offres quant à leur capacité à participer au rééquilibrage du réseau.

L'acteur d'ajustement 108 peut être un serveur central comprenant au moins un processeur opérant avec un ensemble de modules pour effectuer les fonctions de surveillance, contrôle, prévision, anticipation des déséquilibres et régulation de la production et de la consommation d'une ressource partagée entre les équipements.

Le réseau de communication 102 permet une communication bidirectionnelle entre l'acteur d'ajustement et chacun des équipements du réseau de ressource partagée. Selon les modes d'implémentation, le réseau peut être un réseau filaire ou sans fil utilisant divers protocoles de communication, tels des protocoles de type ADSL, 2G/3G/4G, GPRS et/ou WiFi ou encore des protocoles de type « Smart Machine ».

Chacun des équipements autonomes du réseau possède une capacité intrinsèque de modulation de production ou consommation, qui est sa capacité propre à modifier, dans un futur proche, sa consommation et/ou sa production d'une ressource partagée. Par exemple, la capacité intrinsèque de modulation d'une centrale électrique est sa capacité à produire plus d'électricité pendant une durée limitée pour répondre à un besoin à court terme du réseau électrique. Ou encore la capacité intrinsèque d'un équipement électrique peut être soit sa capacité à abaisser sa consommation pendant une durée limitée pour contrer un déséquilibre où la production globale d'une ressource est inférieure à la consommation globale, soit sa capacité à augmenter sa consommation pour contrer un déséquilibre inverse où la production globale d'une ressource est supérieure à la consommation globale.

Ainsi, la capacité de modulation d'un équipement est une quantité de la ressource partagée, définie par une amplitude évoluant sur un intervalle de temps limité, que l'équipement peut consommer (respectivement produire) en moins ou en plus par rapport à son plan de consommation (respectivement production) nominal sans dégrader son fonctionnement. Le plan de consommation (respectivement production) nominal est la quantité qui sera consommée (respectivement produite) par l'équipement s'il n'effectue aucune modulation suite à une offre activée. Le fonctionnement d'un équipement est considéré comme dégradé dès lors qu'il n'accomplit pas ses tâches dans le respect rigoureux des exigences de l'utilisateur. Par exemple, un appareil thermique qui ne respecte pas la température de consigne (radiateur, chauffe-eau, réfrigérateur, etc) a un fonctionnement dégradé. En revanche, un appareil qui décale sa consommation (comme un chargeur de batterie qui fait une pause et reprend un peu plus tard) conserve un fonctionnement non dégradé. La présente invention permet avantageusement d'évaluer les capacités de modulation en consommation et/ou en production de chaque équipement du réseau et d'activer des offres de variation individuelles sans connaissance pour l'acteur d'ajustement de la nature même de l'équipement.

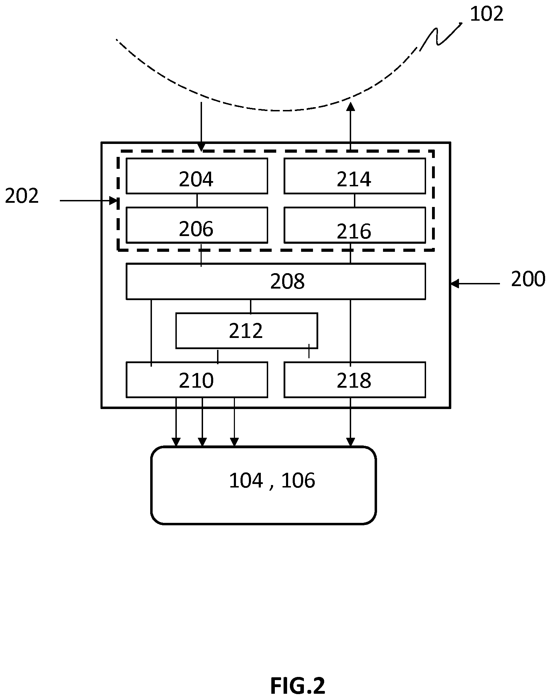

Référence est maintenant faite à la figure 2 qui montre de manière schématique les différents modules du dispositif 200 de l'invention. D'une manière générale, le dispositif 200 permet à un équipement autonome (104, 106) de participer à l'équilibrage du réseau de partage d'une ressource en émettant vers l'acteur d'équilibrage une offre calibrée sur sa capacité intrinsèque de modulation. Pour cela, le dispositif comprend des moyens qui permettent de récupérer et analyser des données internes de l'équipement auquel il est couplé, d'en déterminer la capacité intrinsèque de modulation, et de traduire cette capacité en une offre de service d'équilibrage qui est diffusée sur le réseau de communication. L'offre de modulation émise par un équipement peut être faite de manière spontanée dite mode « push » en anglais, ou en réponse à une sollicitation de l'acteur d'ajustement.

L'homme du métier comprend que les modules du dispositif 200 qui vont être décrits peuvent constituer des unités d'un même processeur 200 ou des unités de différents processeurs couplées opérationnellement.

Le dispositif 200 est couplé au réseau de communication 102 via un module de communication 202.

Le module de communication 202 comprend des moyens de réception 204 pour recevoir des messages du réseau de communication. Les messages entrants peuvent être soit des demandes de sollicitation ou appel d'offre à fournir la capacité de modulation de l'équipement, soit des ordres d'activation de la modulation de l'équipement. Dans un mode d'implémentation préférentielle, les ordres d'activation proviennent de l'acteur d'ajustement auprès duquel l'équipement a préalablement adressé une offre de modulation.

Les moyens de réception 204 sont couplés à des moyens de formatage 206 qui permettent d'interpréter le message reçu et l'adapter dans un format interprétable par un module d'évaluation de capacité 208 du dispositif.

Le module de communication 202 comprend aussi des moyens d'émission 214 pour émettre des messages sur le réseau de communication. Le message émis contient les informations sur la capacité de modulation de l'équipement, constituant ainsi une offre de service. Dans des variantes d'implémentation, le message peut aussi contenir des informations supplémentaires comme par exemple une indication sur la sécabilité de la puissance modulable disponible. Un message d'acquittement peut aussi être émis en réponse aux ordres d'activation pour confirmer la prise en compte de l'ordre. Ce message peut contenir des informations supplémentaires sur une adaptation éventuelle de l'offre. Les moyens d'émission 214 sont couplés à des moyens de formatage 216 qui permettent de formater la réponse reçue du module d'évaluation de capacité intrinsèque 208 en un message à émettre sur le réseau de communication selon le protocole du réseau.

Le module d'évaluation de la capacité 208 d'un équipement permet de calculer, via un algorithme spécifique pour l'équipement, la capacité intrinsèque de modulation de l'équipement en fonction de données temps réel et de paramètres propres à l'équipement. Le module d'évaluation 208 est couplé à un module 210 d'acquisition de données temps réel et à un module 212 de stockage qui permet de stocker des données statiques, dynamiques et des données temps réel.

Dans une réalisation particulière, la capacité intrinsèque de modulation peut être prédéfinie et fixée pour un équipement, et cette valeur est systématiquement retournée comme offre de modulation à tout appel d'offre.

Le module de stockage 212 permet de stocker des données temps réel telles que par exemple la consommation instantanée de l'équipement, des données statiques spécifiques de l'équipement telles que par exemple des données fournies par le fabricant et des données dynamiques.

Dans une implémentation préférentielle, les données temps réel sont acquises par la lecture d'une pluralité de capteurs permettant de relever différentes données variables d'un équipement en fonctionnement. Les paramètres statiques peuvent comprendre par exemple la puissance nominale du moteur, des limites pour la modulation comme une durée maximum et minimum, ou un délai minimum entre deux périodes de modulation.

Dans une réalisation particulière du dispositif pour un équipement thermique, les données dynamiques peuvent être par exemple, une température interne, une valeur de thermostat, une valeur de courant consommé par le moteur d'une pompe. Les données dynamiques peuvent aussi être le résultat de calculs tels une différence entre une température interne et une température de consigne ou une durée correspondant par exemple à la durée du dernier fonctionnement d'une pompe.

L'homme de l'art appréciera que d'autres données et informations non mentionnées puissent aussi être relevées, calculées et stockées.

Le dispositif 200 comprend de plus un module 218 de pilotage, couplé au module 208 d'évaluation de la capacité et au module 212 de stockage de données, et qui permet d'activer auprès d'un équipement une offre de modulation qui a été validée par l'acteur d'ajustement. Le module 218 de pilotage est apte à émettre un signal vers l'équipement auquel il est couplé, de manière filaire ou sans fil, afin de piloter la modulation selon les paramètres de l'ordre d'activation.

Bien que la figure 2 illustre une implémentation où le dispositif de l'invention est couplé à un équipement, cet exemple n'est pas limitatif et un même dispositif avec des moyens d'adressage entre équipements pourra opérer un même ordre d'activation sur plusieurs équipements.

Les figures 3a et 3b illustrent un enchaînement général 300 du traitement d'un message par le dispositif de l'invention.

Le procédé exécuté par un processeur du dispositif, débute quand un message 302 est envoyé d'un acteur d'ajustement sur le réseau de communication. Dans une première étape 304 le procédé permet de vérifier si le dispositif 200 doit traiter la demande. Dans une implémentation préférentielle, le message contient un identifiant réseau permettant au procédé de déterminer si le dispositif appartient au réseau et de passer à l'étape suivante 308. Si le dispositif n'appartient pas au réseau, le procédé permet en 306 de retourner un message de non prise en charge de la demande de l'acteur d'ajustement.

Si le dispositif est concerné par la demande de l'acteur d'ajustement, le procédé permet ensuite en 308 de vérifier si l'équipement peut être un équipement consommateur ou producteur de la ressource ou sinon de retourner en 310 un message de non prise en charge de la demande d'ajustement.

A l'étape suivante 312, le procédé vérifie si le sens de modulation demandé, i.e. augmentation ou diminution, peut être pris en charge ou sinon il retourne en 314 un message de non prise en charge du sens de modulation.

A l'étape suivante 316, le procédé vérifie si une fenêtre de temps indiquée dans la demande peut être prise en charge ou sinon il retourne en 318 un message de non prise en charge de la fenêtre de temps.

Il est à noter que d'autres étapes préliminaires de vérification de prise en charge par l'équipement hôte pourraient être vérifiées selon l'application.

A l'étape suivante 320 (figure 3b), le procédé permet de déterminer le contenu du message et vérifier s'il s'agit d'une demande de capacité ou d'un ordre d'activation.

Si le message concerne une demande de capacité, le procédé poursuit à l'étape 322, pour identifier dans le message les contraintes spécifiques de la demande.

A l'étape suivante 324, le procédé permet la récupération des données statiques et des données dynamiques et temps réel.

A l'étape suivante 326, le procédé permet de vérifier si les données cherchées sont disponibles pour permettre d'initier le calcul en 330 de la capacité intrinsèque de l'équipement ou sinon de retourner en 328 un message indiquant une offre de capacité nulle.

L'ensemble des données disponibles est utilisé pour exécuter un algorithme adapté à l'équipement qui permet de calculer la valeur de capacité intrinsèque de modulation de l'équipement.

Dans une variante d'implémentation où la capacité de modulation est prédéfinie et constante, le procédé peut s'affranchir de l'étape 330 de détermination de la valeur de la capacité intrinsèque de modulation, et retourner directement l'offre de capacité (étape 332).

Quand l'évaluation de la capacité intrinsèque de l'équipement est faite, le procédé permet en 332 de retourner sur le réseau de communication un message contenant l'offre de modulation disponible pour l'équipement.

Pour revenir à l'étape 320, si le contenu du message est un ordre d'activation, le procédé poursuit à l'étape 334 par la lecture des spécifications de l'ordre, puis à l'étape suivante 336, permet de planifier la modulation, et de retourner sur le réseau de communication en 338 un message de confirmation de l'activation de la modulation pour l'équipement.

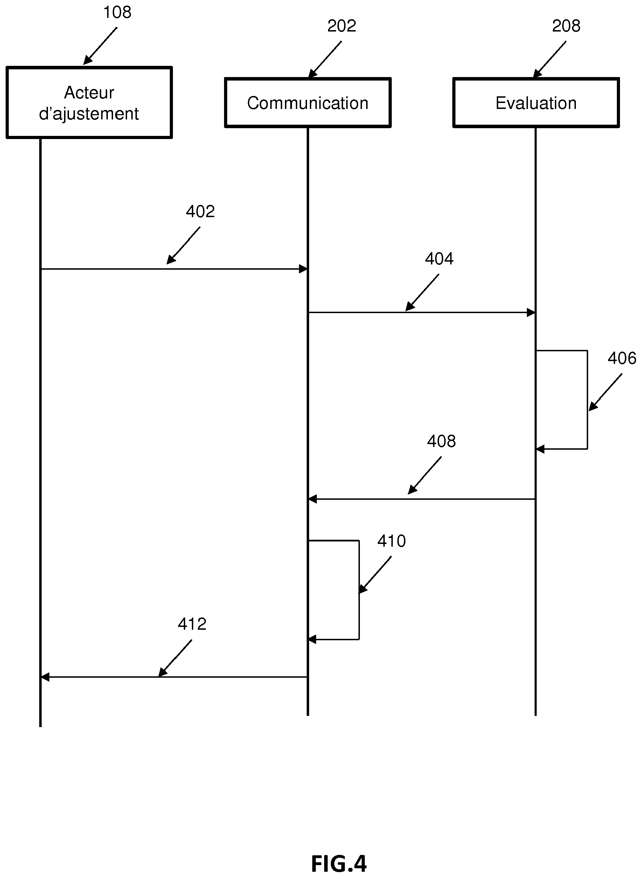

La figure 4 illustre dans un mode de réalisation de l'invention, les échanges de message lors de l'évaluation de la capacité intrinsèque de modulation d'un équipement. Un acteur d'ajustement 108 émet sur un réseau de communication un message 402 correspondant à une demande de recevoir des capacités de modulation selon certaines contraintes. Le message est reçu par le module de communication 202 d'un ou plusieurs dispositifs couplés au réseau de communication. Le module de communication adresse une demande au module d'évaluation de capacité 208 de fournir les valeurs qui permettent de définir la capacité de l'équipement. Le module d'évaluation 208 initie une routine 406 correspondant aux étapes (322, 324, 326, 330) de la figure 3b pour calculer la capacité intrinsèque de l'équipement ou récupérer la valeur prédéfinie, puis retourne un message 408 vers le module de communication 202 qui le met en forme 410 pour émettre un message 412 sur le réseau de communication contenant l'offre de capacité de modulation de l'équipement.

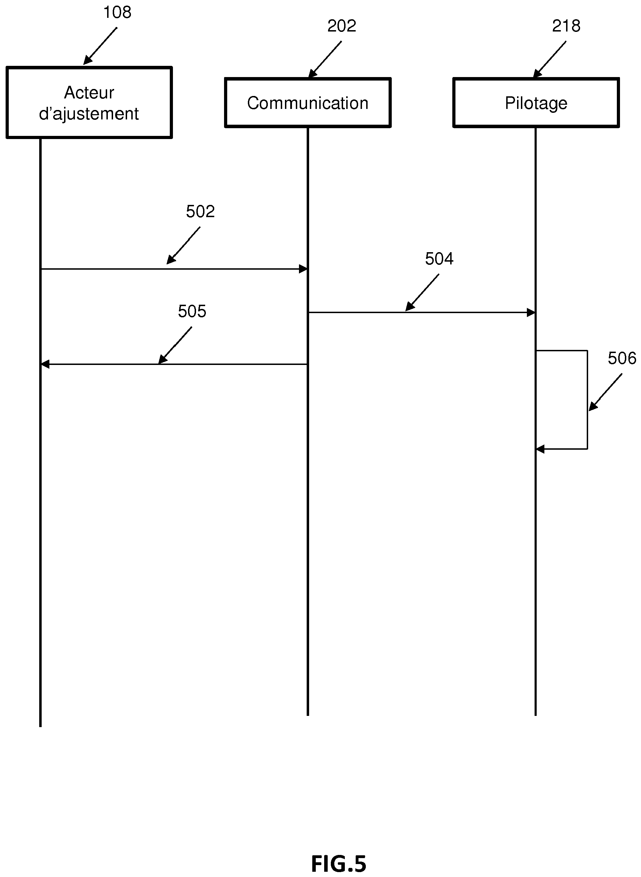

La figure 5 illustre dans un mode de réalisation de l'invention, les échanges de message lors de l'activation de la modulation d'une ressource auprès d'un équipement. Un acteur d'ajustement 108 émet sur un réseau de communication un message 502 correspondant à un ordre d'activation d'une modulation. Le message est reçu par le module de communication 202 d'un ou plusieurs dispositifs couplés au réseau de communication. Le module de communication adresse une demande 504 au module de pilotage 218 de planifier la modulation selon les spécifications contenues dans le message et envoie un message d'accusé de réception de l'ordre d'activation vers l'acteur d'ajustement. Le module de pilotage 218 entre en mode « Modulation » pendant la durée de la modulation 506 et rebascule en mode « Hors modulation » à la fin de l'activation. Dans une implémentation, le module de pilotage délivre un signal qui permet de commander un relais électronique pour adapter la consommation ou la production d'une ressource de l'équipement auquel il est couplé.

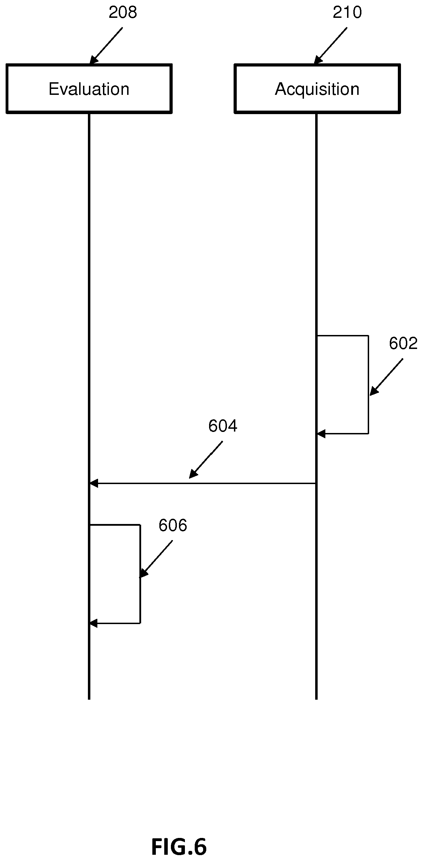

La figure 6 illustre dans un mode de réalisation de l'invention, les échanges de message lors de l'acquisition de données d'un équipement. Le module d'acquisition de données 210 effectue des lectures régulières 602 de différents capteurs couplés à un équipement et les stocke dans le module de stockage 212. Lors de l'évaluation de la capacité d'un équipement par le module d'évaluation 208, les dernières données acquises sont fournies 604 au module d'évaluation qui effectue les contrôles nécessaires et procède au calcul 406 de la valeur de la capacité intrinsèque. Lors du traitement d'un ordre d'activation, le module d'évaluation refait un calcul de la capacité pour vérifier l'adéquation entre l'ordre reçu et l'offre qui avait été émise et selon l'état courant de l'équipement.

L'homme du métier considérera que la présente invention a été décrite pour un ou plusieurs modes de réalisation qui ne sont pas limitatifs. L'invention peut s'implémenter à partir d'éléments matériel et/ou logiciel et opérer sur ou en liaison à un ordinateur. Elle peut être disponible en tant que produit programme d'ordinateur sur un support lisible par ordinateur. Le support peut être électronique, magnétique, optique, électromagnétique ou être un support de diffusion de type infrarouge. De tels supports sont par exemple, des mémoires à semiconducteur (Random Access Memory RAM, Read-Only Memory ROM), des bandes, des disquettes ou disques magnétiques ou optiques (Compact Disk - Read Only Memory (CD-ROM), Compact Disk - Read/Write (CD-R/W) et DVD).

## Revendications

1. Un procédé permettant de connaitre la capacité d'un équipement à moduler sa consommation et/ou sa production d'une ressource, le procédé comprenant les étapes :
- d'émettre sur un réseau de communication partagé entre une pluralité d'équipements, un message de sollicitation à fournir une offre de modulation en consommation et/ou en production d'une ressource ;
- de déterminer pour au moins un équipement, une valeur de capacité intrinsèque de modulation, la valeur étant représentative de la capacité propre dudit au moins un équipement à modifier, sur un intervalle de temps limité, sa consommation et/ou sa production de ladite ressource, ladite valeur étant calculée en fonction de données statiques, dynamiques et de temps réel dudit au moins un équipement ; et
- de recevoir sur le réseau de communication, un message de modulation indiquant selon la valeur de la capacité intrinsèque calculée, une offre de modulation pour ledit au moins un équipement à augmenter ou baisser sa consommation ou sa production de ladite ressource.

2. Le procédé selon la revendication 1 comprenant avant l'étape de détermination, une étape de réception du message de sollicitation par ledit au moins un équipement.

3. Le procédé selon la revendication 1 ou 2 dans lequel le message de sollicitation contient des contraintes pour la modulation, et l'étape de détermination pour ledit au moins un équipement de la valeur de sa capacité intrinsèque de modulation, est faite en fonction des données statiques, dynamiques et temps réel dudit au moins un équipement, et en fonction des contraintes de modulation contenues dans le message de sollicitation.

4. Le procédé selon l'une quelconque des revendications 1 à 3 dans lequel l'étape de détermination de la capacité intrinsèque de modulation dudit au moins un équipement, comprend les étapes de :
- récupérer des données statiques, dynamiques et temps réel dudit au moins un équipement ; et
- utiliser l'ensemble des données pour exécuter un algorithme de calcul générant une valeur représentative de la capacité intrinsèque de modulation dudit au moins un équipement à modifier, sur un intervalle de temps limité, sa consommation et/ou sa production de ladite ressource.

5. Le procédé selon la revendication 4 comprenant de plus une étape d'interpréter le message de sollicitation reçu en fonction du protocole de communication du réseau et une étape de formater le message pour exécution par l'algorithme de calcul.

6. Le procédé selon l'une quelconque des revendications 1 à 5 comprenant de plus une étape d'émettre par ledit au moins un équipement un message d'offre de modulation sur le réseau de communication, formaté selon le protocole de communication dudit réseau.

7. Le procédé selon l'une quelconque des revendications 1 à 6 dans lequel le message de sollicitation provient d'une entité d'ajustement qui contrôle l'équilibre du partage de ressources entre la pluralité d'équipements et dans lequel le message d'offre de modulation émis par ledit au moins un équipement est envoyé vers ladite entité d'ajustement.

8. Le procédé selon l'une quelconque des revendications 1 à 7 dans lequel les données statiques dudit au moins un équipement sont prédéfinies par un fabricant dudit au moins un équipement.

9. Le procédé selon l'une quelconque des revendications 1 à 8 dans lequel les données de fonctionnement en temps réel consistent en des valeurs relevées sur une pluralité de capteurs couplés audit au moins un équipement.

10. Le procédé selon l'une quelconque des revendications 3 à 9 dans lequel les contraintes contenues dans le message de sollicitation sont relatives à des délais ou à des plages de temps, et où l'offre de modulation est faite pour ces délais ou ces plages de temps.

11. Le procédé selon l'une quelconque des revendications 3 à 10 dans lequel le message de sollicitation contient de plus un ordre d'activation de la modulation dudit au moins un équipement.

12. Le procédé selon la revendication 11 comprenant de plus une étape d'activation de la modulation dudit au moins un équipement qui consiste à piloter des composants couplés audit au moins un équipement pour augmenter ou baisser sa consommation ou sa production de la ressource.

13. Le procédé selon les revendications 11 ou 12 dans lequel le message d'offre de modulation contient de plus une confirmation de l'activation de la modulation.

14. Le procédé selon l'une quelconque des revendications 1 à 13 dans lequel la ressource est choisie dans le groupe des ressources électriques ou thermiques.

15. Un dispositif permettant de connaitre la capacité d'un équipement à moduler sa consommation et/ou sa production d'une ressource, le dispositif comprenant des moyens pour mettre en oeuvre les étapes du procédé selon l'une quelconque des revendications 1 à 14.

16. Le dispositif selon la revendication 15 dans lequel les moyens pour mettre en oeuvre l'étape de détermination de la capacité intrinsèque de modulation d'au moins un équipement sont des modules couplés audit au moins un équipement.

17. Le dispositif selon la revendication 15 ou 16 dans lequel les moyens comprennent :
- un processeur ; et
- des moyens couplés au processeur pour mettre en oeuvre les étapes du procédé selon l'une quelconque des revendications 1 à 14.

18. Un produit programme d'ordinateur, ledit programme d'ordinateur comprenant des instructions de code permettant les étapes du procédé selon l'une quelconque des revendications 1 à 14, lorsque ledit programme est exécuté.

## Patentansprüche

1. Methode zum Ermitteln der Kapazität eines Geräts zum Modulieren seines Verbrauchs und/oder seiner Erzeugung einer Ressource, wobei das Methode die folgenden Schritte beinhaltet:
- Senden, auf einem von mehreren Geräten benutzten Kommunikationsnetz, einer Anforderungsnachricht zum Liefern eines Angebots für die Modulation des Verbrauchs und/oder der Erzeugung einer Ressource;
- Feststellen, für wenigstens ein Gerät, eines intrinsischen Modulationskapazitätswertes, wobei der Wert die Eigenkapazität des wenigstens einen Geräts repräsentiert, in einem begrenzten Zeitintervall seinen Verbrauch und/oder seine Erzeugung der Ressource zu modifizieren, wobei der Wert in Abhängigkeit von statischen, dynamischen und Echtzeitdaten des wenigstens einen Geräts berechnet wird; und
- Empfangen, auf dem Kommunikationsnetz, einer Modulationsnachricht, die gemäß dem Wert der berechneten intrinsischen Kapazität ein Modulationsangebot für das wenigstens eine Gerät zum Erhöhen oder Verringern seines Verbrauchs oder seiner Erzeugung der Ressource anzeigt.

2. Methode nach Anspruch 1, das vor dem Feststellungsschritt einen Schritt des Empfangens der Anforderungsnachricht durch das wenigstens eine Gerät beinhaltet.

3. Methode nach Anspruch 1 oder 2, bei dem die Anforderungsnachricht Beschränkungen für die Modulation enthält und der Schritt des Feststellens, für das wenigstens eine Gerät, des Wertes seiner intrinsischen Modulationskapazität in Abhängigkeit von statischen, dynamischen und Echtzeitdaten des wenigstens einen Geräts und in Abhängigkeit von in der Anforderungsnachricht enthaltenen Modulationsbeschränkungen erfolgt.

4. Methode nach einem der Ansprüche 1 bis 3, wobei der Schritt des Feststellens der intrinsischen Modulationskapazität des wenigstens einen Geräts die folgenden Schritte beinhaltet:
- Abrufen der statischen, dynamischen und Echtzeitdaten des wenigstens einen Geräts; und
- Benutzen aller Daten zum Ausführen eines Rechenalgorithmus, der einen Wert erzeugt, der die intrinsische Modulationskapazität des wenigstens einen Gerätes repräsentiert, über ein begrenztes Zeitintervall seinen Verbrauch und/oder seine Erzeugung der Ressource zu modifizieren.

5. Methode nach Anspruch 4, das ferner einen Schritt des Interpretierens der empfangenen Anforderungsnachricht in Abhängigkeit vom Kommunikationsprotokoll des Netzes und einen Schritt des Formatierens der Nachricht zur Ausführung durch den Rechenalgorithmus beinhaltet.

6. Methode nach einem der Ansprüche 1 bis 5, das ferner einen Schritt des Aussendens, durch das wenigstens eine Gerät, einer Modulationsangebotsnachricht auf dem Kommunikationsnetz beinhaltet, formatiert gemäß dem Kommunikationsprotokoll des Netzwerks.

7. Methode nach einem der Ansprüche 1 bis 6, bei dem die Anforderungsnachricht von einer Justierungsentität kommt, die die Gleichmäßigkeit der Verteilung von Ressourcen zwischen den mehreren Geräten steuert, und bei dem die von dem wenigstens einen Gerät ausgegebene Modulationsangebotsnachricht zu der Justierungsentität gesendet wird.

8. Methode nach einem der Ansprüche 1 bis 7, bei dem die statischen Daten des wenigstens einen Geräts von einem Hersteller des wenigstens einen Geräts vordefiniert werden.

9. Methode nach einem der Ansprüche 1 bis 8, bei dem die Echtzeit-Betriebsdaten aus Werten bestehen, die von mehreren mit dem wenigstens einen Gerät gekoppelten Sensoren erfasst werden.

10. Methode nach einem der Ansprüche 3 bis 9, bei dem sich die in der Anforderungsnachricht enthaltenen Beschränkungen auf Laufzeiten oder Zeitbereiche beziehen und das Modulationsangebot für diese Laufzeiten oder Zeitbereiche erfolgt.

11. Methode nach einem der Ansprüche 3 bis 10, bei dem die Anforderungsnachricht ferner einen Befehl zur Aktivierung der Modulation des wenigstens einen Geräts enthält.

12. Methode nach Anspruch 11, das ferner einen Schritt des Aktivierens der Modulation des wenigstens einen Geräts beinhaltet, der im Steuern von mit dem wenigstens einen Gerät gekoppelten Komponenten zum Erhöhen oder Verringern seines Verbrauchs oder seiner Erzeugung der Ressource besteht.

13. Methode nach Anspruch 11 oder 12, bei dem die Modulationsangebotsnachricht ferner eine Bestätigung der Aktivierung der Modulation enthält.

14. Methode nach einem der Ansprüche 1 bis 13, bei dem die Ressource aus der Gruppe von elektrischen oder thermischen Ressourcen ausgewählt wird.

15. Vorrichtung zum Ermitteln der Kapazität eines Geräts zum Modulieren seines Verbrauchs und/oder seiner Erzeugung einer Ressource, wobei die Vorrichtung Mittel zum Ausführen der Schritte der Methode nach einem der Ansprüche 1 bis 14 umfasst.

16. Vorrichtung nach Anspruch 15, bei der die Mittel zum Ausführen des Schrittes des Feststellens der intrinsischen Modulationskapazität von wenigstens einem Gerät Module umfassen, die mit dem wenigstens einen Gerät gekoppelt sind.

17. Vorrichtung nach Anspruch 15 oder 16, wobei die Mittel Folgendes umfassen:
- einen Prozessor; und
- Mittel, die mit dem Prozessor gekoppelt sind, um die Schritte der Methode nach einem der Ansprüche 1 bis 14 auszuführen.

18. Computerprogrammprodukt, wobei das Computerprogramm Befehlscode umfasst, der die Schritte der Methode nach einem der Ansprüche 1 bis 14 beim Abarbeiten des Programms ausführt.

## Claims

1. A method to determine the ability of a piece of equipment to modulate its consumption and/or its production of a resource, the method comprising the steps:
- transmitting on a communication network shared between a plurality of pieces of equipment a message requesting the provision of a resource consumption and/or production modulation offer;
- determining for at least one piece of equipment an intrinsic modulation ability value, the value being representative of the innate ability of said at least one piece of equipment to modify, over a limited interval of time, its consumption and/or its production of said resource, said value being calculated according to static, dynamic and real time data of said at least one piece of equipment; and
- receiving on the communication network a modulation message indicating, according to the calculated intrinsic ability value, a modulation offer for said at least one piece of equipment to increase or reduce its consumption or its production of said resource.

2. The method according to Claim 1, comprising before the determining step, a step of receiving the request message by said at least one piece of equipment.

3. The method according to Claim 1 or 2, wherein the request message contains constraints for the modulation, and the step of determining, for said at least one piece of equipment, the value of its intrinsic modulation ability, is performed according to the static, dynamic and real time data of said at least one piece of equipment, and according to the modulation constraints contained in the request message.

4. The method according to any of Claims 1 to 3, wherein the step of determining the intrinsic modulation ability of said at least one piece of equipment comprises the steps of:
- retrieving static, dynamic and real time data of said at least one piece of equipment; and
- using all of the data to execute a calculation algorithm that generates a value representative of the intrinsic modulation ability of said at least one piece of equipment to modify, over a limited interval of time, its consumption and/or its production of said resource.

5. The method according to Claim 4, further comprising a step of interpreting the request message received according to the network communication protocol and a step of formatting the message for execution by means of the calculation algorithm.

6. The method according to any of Claims 1 to 5, further comprising a step of transmitting by means of said at least one piece of equipment a message offering modulation over the communication network, formatted according to the communication protocol of said network.

7. The method according to any of Claims 1 to 6, wherein the request message comes from an adjustment entity which controls the balance of the share of resources between the plurality of pieces of equipment and in which the message offering modulation transmitted by said at least one piece of equipment is sent to said adjustment entity.

8. The method according to any of Claims 1 to 7, wherein the static data of said at least one piece of equipment are pre-defined by a manufacturer of said at least one piece of equipment.

9. The method according to any of Claims 1 to 8, wherein the real time function data consist of values taken from a plurality of sensors coupled to said at least one piece of equipment.

10. The method according to any of Claims 3 to 9, wherein the constraints contained in the request message relate to periods or to time ranges, and where the modulation offer is made for these periods or these time ranges.

11. The method according to any of Claims 3 to 10, wherein the request message additionally contains an order to activate the modulation of said at least one piece of equipment.

12. The method according to Claim 11, further comprising a step of activating the modulation of said at least one piece of equipment which consists in directing components coupled to said at least one piece of equipment in order to increase or reduce its resource consumption or production.

13. The method according to Claims 11 or 12, wherein the message offering modulation additionally contains confirmation of activation of the modulation.

14. The method according to any of Claims 1 to 13, wherein the resource is chosen from the group of electrical or thermal resources.

15. A device to determine the ability of a piece of equipment to modulate its resource consumption and/or production, the device comprising means for performing the steps of the method according to any one of Claims 1 to 14.

16. The device according to Claim 15, wherein the means for performing the step of determining the intrinsic modulation capacity of at least one piece of equipment comprise modules coupled to said at least one piece of equipment.

17. The device according to Claim 15 or 16, wherein the means comprise:
- a processor; and
- means coupled to the processor for performing the steps of the method according to any one of Claims 1 to 14.

18. A computer programme product, said computer programme comprising code instructions that perform the steps of the method according to any one of Claims 1 to 14 when said programme is executed.
